# EUROPEAN PATENT SPECIFICATION

(11) **EP 4 330 816 B1**
(45) Date of publication and mention of the grant of the patent: **22.10.2025**
(21) Application number: 22735280.4
(22) Date of filing: 13.06.2022
(51) Int. Cl.: G06F 9/455

(54) **DYNAMIC PERFORMANCE MONITORING VIRTUALIZATION SUPPORT**
VIRTUALISIERUNGSUNTERSTÜTZUNG ZUR DYNAMISCHEN LEISTUNGSÜBERWACHUNG
SUPPORT DE VIRTUALISATION DE SURVEILLANCE DE PERFORMANCE DYNAMIQUE

(30) Priority: 16.06.2021 LU 500282
(43) Date of publication of application: 06.03.2024
(73) Proprietor: Microsoft Technology Licensing, LLC, Redmond, WA 98052 (US)
(72) Inventor: SHERWIN, Bruce, John, Jr., Redmond, WA 98052 (US); CHAWLA, Shishir, Redmond, WA 98052 (US); ZHANG, Xin, David, Redmond, WA 98052 (US); CHAPPELL, Robert, S., Redmond, WA 98052 (US); BERGER, Daniel, Sebastian, Redmond, WA 98052 (US)
(74) Representative: CMS Cameron McKenna Nabarro Olswang LLP
(86) International application number: PCT/US2022/072904
(87) International publication number: WO 2022/266603

(56) References cited:
- US-B2- 10 929 164
- US-B2- 9 769 050

## Description

### TECHNICAL FIELD

The present disclosure relates to systems, methods, and devices that are directed to multiplexing access of telemetry data generated by performance monitoring hardware of one or more processors.

### BACKGROUND

Many processors have on-chip hardware, often referred to as a performance monitoring unit (PMU), which monitors micro-architectural events like elapsed cycles, cache hits, cache misses, etc. Such performance monitoring hardware can often be leveraged to measure software performance and inform optimization techniques. It can also be used for fabric optimization in a cloud environment and for "wear leveling" or predict hardware failure analysis. However, these use cases all compete for finite hardware resources.

In particular, when a computer system hosts multiple virtual machines (VMs), the hardware of the computer system is virtualized in the multiple VMs. Generally, the finite performance monitoring hardware can be configured in one way or another based on the configuration of the VM and/or the configuration of the computer system at the time the computer system starts. When the PMU is offered to guests, the PMU hardware cannot be used since it is assumed that the guest VM might be using it for its own use. This prevents the host from extracting any useful telemetry as the PMU cannot be accessed.

US 10 929 164 B2 describes a method for enabling a hypervisor to determine the instruction executed by the virtual machine that causes a transition event. The method may comprise determining, by a processing device executing a hypervisor, a data storage location of a particular instruction of a guest operating system; detecting, by the hypervisor, a transition event between a virtual machine executing the guest operating system and the hypervisor, wherein the virtual machine comprises a virtual processor; comparing, by the hypervisor, an instruction pointer of the virtual processor and the data storage location of the particular instruction to determine a cause of the transition event; and executing, by the hypervisor, an operation corresponding to the cause of the transition event.

US 9 769 050 B2 describes an apparatus that is associated with end-to-end datacenter performance control. The apparatus may receive a datacenter performance target, determine an end-to-end datacenter performance level based at least in part on quality of service data collected from a plurality of nodes, and send a mitigation command based at least in part on a result of a comparison of the end-to-end datacenter performance level determined to the datacenter performance target. The apparatus includes a datacenter performance monitor to receive a datacenter performance target corresponding to a service level agreement, and a mitigation module to send a mitigation command based at least in part on a result of a comparison of an end-to-end datacenter performance level to a datacenter performance target.

### BRIEF SUMMARY

The invention is set out in the appended set of claims.

The principles described herein provide per VM telemetry at a management partition in a host mode, while allowing each VM to view its own telemetry when the guest partition needs it. This enables on-node decisions and reallocations of resources based on per-VM telemetry. For example, the principles described herein are capable of identifying the VMs that are more resilient to frequency reduction during power capping events, such that VMs with collectively lower risk of triggering capping may be packed together, and/or VMs with orthogonal resource usages may be packed together. As another example, the principles described herein are also capable of identifying VMs sensitive to memory latency (MEM bound) and/or identifying which VMs might benefit from an increase in core(s), last level cache (LLC), and/or memory frequency as not all VMs will benefit from it.

The principles described herein are related to a computer system that can be used to multiplex access to the performance monitoring hardware of one or more processors in different performance monitoring modes. The computer system has a hypervisor installed thereon, configured to manage a plurality of virtual machines, including a management partition and one or more guest partitions. This system allows for configuration of the performance monitoring hardware in three modes, namely, a first mode (also referred to as a guest mode), a second mode (also referred to as a host mode), and a third mode (also referred to as a system mode).

In some embodiments, the first mode, having the highest priority, is configured when a VM is using the performance monitoring hardware. The first mode is activated by intercepting guest access to the performance monitoring hardware and disabling any other mode that was configured on the computer system. The VM is essentially unaware of the fact that the performance monitoring hardware is being virtualized underneath it.

In some embodiments, the second mode, having a second-highest priority, can be configured by the host or the management partition on a per partition virtual processor basis to collect telemetry for the specific virtual processor. This mode can only be enabled when the guest partition is not using the performance monitoring hardware. In some embodiments, if a guest partition tries to access the performance monitoring hardware while the host mode is active, the hypervisor will store the performance monitoring hardware state for host mode and restore the performance monitoring hardware state to the guest mode, essentially disabling the host mode.

In some embodiments, the third mode, having the lowest priority, can be configured by the host partition on a system level or on a per logical processor level. This allows for performance monitoring hardware telemetry collection at a system level, which includes events from any guests and the hypervisor running on that logical processor. This mode, when configured, becomes active when the performance monitoring hardware is not in the guest mode or the host mode. As such, a guest performance monitoring hardware access or programming of host mode for a guest virtual processor (VP) will disable the system mode.

This summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

### BRIEF DESCRIPTION OF THE DRAWINGS

In order to describe the manner in which the above-recited and other advantages and features of the invention can be obtained, a more particular description of the invention briefly described above will be rendered by reference to specific embodiments thereof, which are illustrated in the appended drawings. Understanding that these drawings depict only typical embodiments of the invention and are not, therefore, to be considered to be limiting of its scope, the invention will be described and explained with additional specificity and detail through the use of the accompanying drawings in which:
Figure 1 illustrates an example of an architecture of a computer system that implements the principles described herein;
Figure 2 illustrates an example of an architecture of a computer system in which a guest partition is configured to access to performance monitoring hardware via intercepts;
Figure 3 illustrates an example of an embodiment, in which when guest mode and host mode are switched, the state of performance monitoring hardware is stored in a memory and then restored to the new mode;
Figure 4A illustrates an example of a CPU that includes multiple core processors having counter registers and configuration registers as performance monitoring hardware;
Figure 4B illustrates an example of a CPU that includes multiple core processors and multiple uncore processors having model-specific registers (MSRs) and programmable counters (PMUs) as performance monitoring hardware;
Figure 5A illustrates a flowchart of an example method for enabling access to performance monitoring hardware in different modes;
Figure 5B illustrates a flowchart of an example method for enabling a guest mode at a particular guest partition;
Figure 5C illustrates a flowchart of an example method for enabling a host mode at a management partition;
Figure 5D illustrates a flowchart of an example method for enabling a system mode at the management partition;
Figure 6A illustrates a flowchart of an example method for updating a configuration of a portion of performance monitoring hardware at a management partition; and
Figure 6B illustrates a flowchart of an example method for updating a configuration of a portion of performance monitoring hardware at a guest partition.

### DETAILED DESCRIPTION

The principles described herein provide per VM telemetry at a management partition in a host mode, while allowing each VM to view its own telemetry when the guest partition needs it. This enables on-node decisions and reallocations of resources based on per-VM telemetry. For example, the principles described herein are capable of identifying the VMs that are more resilient to frequency reduction during power capping events, such that VMs with collectively lower risk of triggering capping may be packed together, and/or VMs with orthogonal resource usages may be packed together. As another example, the principles described herein are also capable of identifying VMs sensitive to memory latency (MEM bound) and/or identifying which VMs might benefit from an increase in core(s), last level cache (LLC), and/or memory frequency as not all VMs will benefit from it.

The principles described herein are related to a computer system that can be used to multiplex access to the performance monitoring hardware of one or more processors in different performance monitoring modes. The computer system has a hypervisor installed thereon, configured to manage a plurality of virtual machines, including a management partition and one or more guest partitions. This system allows for configuration of the performance monitoring hardware in three modes, namely, a first mode (also referred to as a guest mode), a second mode (also referred to as a host mode), and a third mode (also referred to as a system mode).

In general, the guest mode is a mode, in which a guest partition has exclusive access to performance monitoring hardware; the host mode is a mode, in which a host partition (or a management partition) has access to the performance monitoring hardware in each VM's virtual processor (VP), which is started and controlled on a per-VM basis. The system mode is a mode, in which the host partition has access to the performance monitoring hardware on all logical processors, independent of which and whether a virtual processor is running on this logical processor.

In some embodiments, the first mode, having the highest priority, is configured when a VM is using the performance monitoring hardware. The first mode is activated by intercepting guest access to the performance monitoring hardware and disabling any other mode that was configured on the computer system. The VM is essentially unaware of the fact that the performance monitoring hardware is being virtualized underneath it.

In some embodiments, the second mode, having a second-highest priority, can be configured by the host or the management partition on a per partition virtual processor basis to collect telemetry for the specific virtual processor. This mode can only be enabled when the guest is not using the performance monitoring hardware. In some embodiments, if a guest tries to access the performance monitoring hardware while the host mode is active, the hypervisor will store the performance monitoring hardware state for host mode and restore the performance monitoring hardware state to the guest mode, essentially disabling the host mode.

In some embodiments, the third mode, having the lowest priority, can be configured by the host on a system level or on a per logical processor level. This allows for performance monitoring hardware telemetry collection at a system level, which includes events from any guests and the hypervisor running on that logical processor. This mode, when configured, becomes active when the performance monitoring hardware is not in the guest mode or the host mode. As such, a guest performance monitoring hardware access or programming of host mode for a guest virtual processor (VP) will disable the system mode.

It is advantageous to disable host mode when the guest mode is requested based on the priorities. In particular, if host mode was enabled, and the guest mode was requested and provided without disabling the host mode, doing so will not report accurate telemetry. Counters are programmable to track a specific event. Each counter can only track one event. If the guest partition first configures the event and the host partition then configures another event in the same counter before the guest got to read its event count, the guest would not be able to get any use of the performance monitoring hardware. For example, to get proper counts for a free-running event counter such as "instructions retired from execution," the guest partition would like to know how many instructions have passed since it last measured. A typical usage is to set this timer to 0, and then after some time (e.g., 100 ms), the guest partition would read the counter value X, which is interpreted as X/100ms instructions are happening. If the host mode changes the programmed event or resets the timer, the guest's counter value would be incorrect.

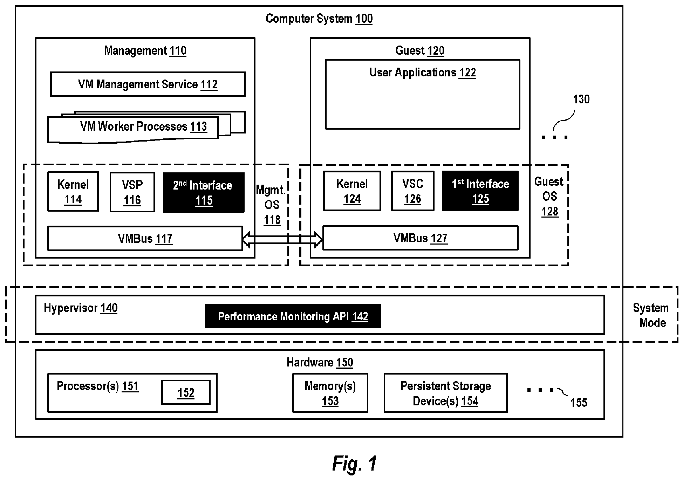

Figure 1 illustrates an example architecture of a computer system 100 that enables the principles described herein. The computer system 100 includes multiple hardware devices 150, such as (but not limited to) one or more processors 151 and performance monitoring hardware 152. In some embodiments, the performance monitoring hardware 152 is part of the processors. In some embodiments, some of the performance monitoring hardware 152 is a separate hardware device coupled to the processors 151. The hardware devices 150 also includes one or more computer-readable short-term memories 153 (such as volatile memories) and/or computer-readable persistent storage devices 154. The ellipsis 155 represents that there can be additional types of hardware devices that are in or coupled to the computer system 100.

In some embodiments, the performance monitoring hardware 152 is a set of registers that are configured to monitor the performance of one or more processors 151. In some embodiments, the set of registers includes one or more CPU counter registers and one or more CPU configuration registers. In some embodiments, the set of registers includes one or more model-specific registers (MSRs), such as programmable counters (PMUs) and/or fixed counters.

The computer system also includes multiple software components installed on and/or executed by the hardware devices. The software components include a hypervisor 140. The hypervisor 140 is a layer of software that sits between the hardware and one or more operating systems. The hypervisor 140's primary job is to provide isolated execution environments called partitions. The hypervisor controls and arbitrates access to the underlying hardware.

As illustrated in Figure 1, the computer system 100 includes multiple partitions, such as a management partition 110 and one or more guest partitions 120. The ellipsis 130 represents that there may be any number of guest partitions. The management partition hosts a management operating system 118 that includes a kernel 114 and one or more virtualization service providers (VSPs) 116. Each of the one or more guest partitions hosts a guest operating system 128 that includes a kernel 124 and a virtualization service consumers (VSCs) 126. Each of the management partition 110 and the one or more guest partitions 120 with their operating systems 118, 128 is also referred to as a virtual machine (VM), which is a virtualization or emulation of a computer system. In some embodiments, additional user applications 122 are installed on top of the operating system 128 of the guest partition 120.

The partitions (including the management partition 110 and the guest partition 120) do not have direct access to the physical processors 151, nor do they handle the processor interrupt. Instead, they have a virtual view of the processors 151 and run in a virtual memory address region that is private to each partition. The hypervisor 140 handles the interrupts to the processors 151 and redirects them to the respective partition.

In some embodiments, the guest partitions 120 also do not have direct access to other hardware resources and are presented a virtual view of the resources as virtual devices. Requests to the virtual devices are redirected either via the VMBus 117, 127 to the management partition or via hypercalls to the hypervisor. The VMBus is a logical inter-partition communication channel. The manage partition 110 hosts VSPs 116, which communicate over the VMBus 117, 127 to handle device access requests from guest partitions. Guest partitions host Virtualization Service Consumers VSCs, which redirect device requests to VSPs in the parent partition via the VMBus, 117, 127. In some embodiments, each VSC communicates with a corresponding VSP in the management partition over the VMBus 117, 127 to satisfy a guest partition's device I/O request.

In some embodiments, intercepts are a primary mechanism used to maintain a consistent view of virtual processors that are visible to the guest operating systems 128. For example, when the guest operating system 128 requests for accessing virtual processors, the request is intercepted by the hypervisor 140 and handled in a way that maintains a consistent view of the virtual machine.

As illustrated, the management partition 110 further includes one or more virtual machine worker processes 113. Each of the virtual machine worker processes spawns a separate worker process for each running virtual machine. The management partition 110 also includes a VM management service 112 that is configured to manage the state of all virtual machines in the guest partitions 120. In some embodiments, the virtual machine management service 112 exposes a set of application programming interfaces (APIs) for managing and controlling virtual machines corresponding to the guest partitions 120.

As briefly discussed above, the hardware devices 150 includes performance monitoring hardware 152 that is configured to monitor the performance of the one or more processors 151. In some embodiments, the performance monitoring hardware 152 is configured to generate telemetry data associated with the one or more processors that are being monitored.

In particular, the principles described herein enable multiplex access to the performance monitoring hardware of one or more processors in different performance monitoring modes. In embodiments, at least one guest partition 120 is provided a first interface 125 configured to allow the at least one guest partition 120 to enable/disable the guest mode. When the guest mode is enabled at the guest partition 120, the guest partition 120 is able to access performance monitoring hardware corresponding to virtual processor(s) of the at least one guest partition; the management partition 110 is provided a second interface 115 configured to allow the management partition to enable/disable a host mode and/or a system mode. When the host mode is enabled, the management partition 110 is able to access performance monitoring hardware on a per VM basis; and/or the host. When the system mode is enabled, the management partition is able to access performance monitoring hardware on a system level and/or on a per logical processor level.

In some embodiments, the guest mode has a first priority, and the host mode has a second priority that is lower than the first priority, such that when the guest mode at a particular guest partition 120 is enabled, the host mode associated with the particular guest partition 120 at the management partition 110 is automatically disabled. In some embodiments, the system mode has a third priority that is lower than the second priority, such that when the guest mode is enabled, the host mode and the system mode are automatically disabled, and when the host mode is enabled, the system mode is automatically disabled.

In some embodiments, when the guest mode is enabled, the hypervisor 140 configures the processor(s) 151 to deliver an intercept to the hypervisor 140 in response to the guest partition 120's access to performance monitoring hardware associated with a virtual processor corresponding to the guest partition 120. Intercepts are a mechanism used to maintain a consistent view of the virtual processor visible to the guest operating system 128. Instructions and operations for accessing performance monitoring hardware associated with a virtual processor of the guest partition 120 are intercepted by the hypervisor and handled in a way that maintains a consistent view of the virtual machine at the guest partition 120.

In some embodiments, the management partition 110 is configured to send hypercalls to the hypervisor 140 when the management partition 110 requests for enabling the host mode or the system mode. For example, when the management partition 110 requests for access to performance monitoring hardware for monitoring a virtual processor (VP) of a particular guest partition in the host mode, a hypercall is issued with specific information, such as (but not limited to) a VM identifier corresponding to the particular guest partition, a VP identifier corresponding to the VP of the particular guest partition, PMU counters identifiers, and/or particular events that are to be tracked.

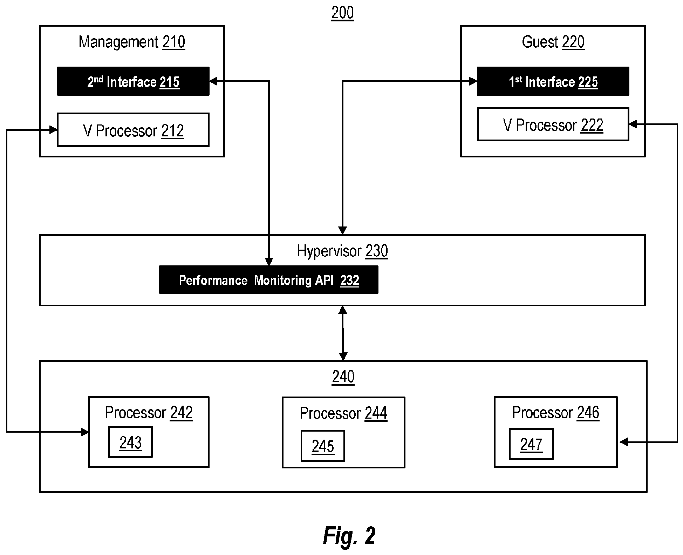

Figure 2 illustrates an example of an architecture of a computer system 200 (which corresponds to the computer system 100 of Figure 1), in which a guest partition 220 is configured to access to performance monitoring hardware via intercepts. As illustrated, the computer system 200 includes multiple hardware devices 240 (which corresponds to the hardware devices 150 of Figure 1) The hardware devices 240 includes multiple processors 242, 244, 246 (which corresponds to the one or more processors 151 of Figure 1), each of which is coupled to a portion of performance monitoring hardware 243, 245, and 247. For example, the processor 242 is coupled to performance monitoring hardware 243 configured to monitor the performance of the processor 242; the processor 244 is coupled to performance monitoring hardware 245 configured to monitor the performance of the processor 244, and the processor 246 is coupled to performance monitoring hardware247 configured to monitor the performance of the processor 246.

The computer system 200 also has multiple software components, including a hypervisor 230 (which corresponds to the hypervisor 140 of Figure 1), a management partition 210 (which corresponds to the management partition 110 of Figure 1), and at least one guest partition 220 (which corresponds to the guest partition 120 of Figure 1). As illustrated, the guest partition 220 includes a virtual processor 222 corresponding to the processor 246, and the management partition also includes a virtual processor 212 corresponding to the processor 242.

The hypervisor 230 includes a performance monitoring API 232 (which corresponds to the performance monitoring API 142 of Figure 1). The guest partition 220 includes a first interface 225 (which corresponds to the first interface 125 of Figure 1) configured to allow the guest partition 220 to enable/disable the guest mode. When the guest mode is enabled, the guest partition 220 is able to access the performance monitoring hardware 247 for monitoring the processor 246 corresponding to its virtual processor 222 of the guest partition 220. The management partition 210 includes a second interface 215 (which corresponds to the second interface 115 of Figure 1) to allow the management partition 210 to enable/disable the host mode and/or the system mode. When the host mode is enabled, the management partition 210 is able to access the performance monitoring hardware 247 for monitoring the processor 246 corresponding to the virtual processor 222 of the guest partition 220. Notably, the management partition 210 also has its own guest mode, through which the management partition is able to access the performance monitoring hardware 243 for monitoring the processor 242 corresponding to its own virtual processor 212, which will not be further discussed.

As illustrated in Figure 2, when the guest partition 220 enables its guest mode, the guest partition 220 sends an instruction for access to performance monitoring hardware 247. The instruction is intercepted via an intercept mechanism by the hypervisor 230. Receiving the intercept from the guest partition 220, the hypervisor 230 then supplies a response that is consistent with the request. Here, the hypervisor 230 determines whether a host mode associated with the guest partition 220 or the system mode associated with the processor 246 has been enabled. In response to determining that the host mode or the system mode has been enabled, the hypervisor 230 disables the host mode or the system mode, and enables the guest mode. Once the guest mode is enabled, the hypervisor 230 causes the performance monitoring hardware 247 coupled to the processor 246 to be configured to generate telemetry data associated with the processor 246 based on the request of the guest partition 220. The hypervisor 230 then reads the telemetry data generated by the performance monitoring hardware 247 and passes the telemetry data to the guest partition 220. Whenever the guest partition 220 needs to change the configuration of the performance monitoring hardware, the guest partition 220 sends a new intercept, causing the hypervisor 230 to reconfigure the performance monitoring hardware 247 accordingly.

In some embodiments, upon receiving the telemetry data, the guest partition 220 is configured to display the telemetry data. In some embodiments, the guest partition 220 includes a graphical user interface that is configured to visualize the received telemetry data, such that a user can easily understand the performance of the virtual processors 222 running at the guest partition 220. In some embodiments, the guest mode is set to have the highest priority. As such, once the guest mode is enabled, the guest partition will always have access to the performance monitoring hardware 247, regardless of whether a request for the host mode or a request for the system mode is received.

When the management partition 210 enables the host mode associated with the guest partition 220, the management partition 210 sends a hypercall to the hypervisor 230. Upon receiving the hypercall from the management partition 210, the hypervisor 230 determines whether the guest mode of the guest partition 220 has been enabled. If the guest mode of the guest partition 220 has been enabled, the hypervisor 230 prevents the management partition 210 from enabling the host mode. If the guest mode of the guest partition 220 is not enabled, the hypervisor 230 then determines whether the system mode of the processor 246 is enabled. If the system mode of the processor 246 is enabled, the hypervisor 230 disables the system mode and enables the host mode associated with the guest partition 220. Once the host mode is enabled, the hypervisor 230 configures the performance monitoring hardware 247 coupled to the processor 246 to generate telemetry data associated with the processor 246 based on the request of the management partition 220. The hypervisor 230 then reads the telemetry data generated by the performance monitoring hardware 247 and passes the telemetry data to the management partition 220. Whenever the management partition needs to change the configuration of the performance monitoring hardware, the management partition 220 sends a new hypercall to the hypervisor 230, causing the hypervisor 230 to reconfigure the performance monitoring hardware 247.

Similar to the guest mode, in some embodiments, upon receiving the telemetry data, the management partition 210 is configured to display the telemetry data. In some embodiments, the management partition 210 includes a graphical user interface that is configured to visualize the received telemetry data, such that a user managing the management partition 210 can easily understand the performance of the virtual processors 222 running at the guest partition 220. However, unlike the guest partition 220, the management partition 210 is capable of receiving telemetry data associated with multiple guest partitions. Thus, the graphical user interface at the management partition is different from the graphical user interface at the guest partition when telemetry data associated with multiple guest partitions is displayed.

In some embodiments, the host mode has a lower priority than the guest mode. As such, after the host mode associated with the guest partition 220 is enabled, the guest partition 220 can still enable its guest mode. When the guest mode of the guest partition 220 is enabled after the host mode associated with the guest partition 220 has been enabled, the host mode associated with the guest partition 220 is automatically disabled. In some cases, the guest mode of the guest partition 220 may be disabled later after it has been enabled. In some embodiments, the host mode associated with the guest partition 220 is automatically reinstated after the guest mode of the guest partition 220 is disabled. As such, the graphical user interface at the management partition 210 can change on its own depending on which guest partition is enabled or disabled.

Finally, the management partition 210 can also enable a system mode on a system level and/or on a per logical processor level, allowing for performance monitoring hardware telemetry collection for the management partition 210. Such performance monitoring hardware telemetry collection includes events from any guests and the hypervisor running on that logical processor. When the system mode is enabled, the hypervisor 230 or the host determines whether the guest mode or host mode associated with the processor 246 has been enabled by the guest partition 220 or the management partition 210. Only when both the guest mode and the host mode are disabled, the system mode can be enabled. When the system mode is enabled, the performance monitoring hardware 247 is configured to generate telemetry data associated with the processor 246 based on the request of the management partition 210. In some embodiments, a graphic user interface is provided at the management partition 210 for visualizing the telemetric data in the host mode.

In some embodiments, the system mode has a lower priority than the guest mode or the host mode. As such, after the system mode has been enabled, the management partition 210 or the guest partition 220 can still enable the host mode or the guest mode. Once the host mode or the guest mode is enabled, the system mode is automatically disabled. In some embodiments, after the host mode and the guest mode are disabled, the system mode is automatically reinstated. As such, the graphical user interface for the system mode may also change depending on whether a guest mode or a host mode associated with each guest partition is enabled or disabled.

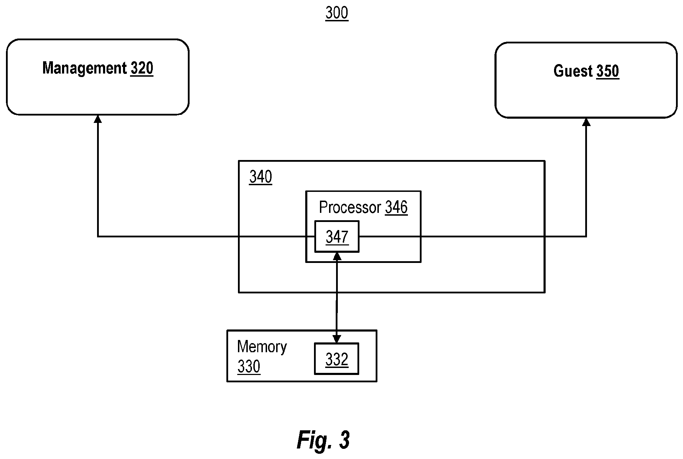

Figure 3 illustrates an example of a process 300 for switching between a guest mode of a guest partition and a host mode of the corresponding partition. As illustrated, the guest partition 350 has a virtual processor corresponding to a physical processor 346 among the hardware devices 340. When the host mode of the guest partition 320 is enabled, the performance monitoring hardware 347 is allocated to the host mode at the management partition 320 for monitoring the performance of processor 346. In some embodiments, when the guest mode at the guest partition 320 is enabled after the host mode has been enabled, the state of the performance monitoring hardware 347 of the host mode is saved in portion 332 of a memory 330, and the host mode is disabled. Thereafter, the guest mode of the guest partition 320 is started or enabled. At the start of the guest mode of the guest partition 320, the state of the performance hardware monitoring hardware 347 is restored from the portion 332 of the memory. After restoring the state in the portion 332 of memory, the performance monitoring hardware 347 is then caused to start monitoring the performance of the processor 346, generating telemetry data associated with processor 346 based on the state restored from the portion 332 of the memory 330 (which was accumulated in the previous host mode) and the current performance of the processor 346. The generated telemetry data is then read by the hypervisor and sends to the guest partition 350.

A similar process may occur, when both the host mode and the guest mode corresponding to the guest partition 350 are enabled at some point, and the guest mode is subsequently disabled. For example, when the guest partition 350 requests to disable the guest mode, the state of the performance management hardware 347 is stored in a portion 332 of the memory 330 before the guest mode is disabled. Thereafter, the host mode is reinstated. At the start of the host mode, the state of the performance monitoring hardware 347 is restored from the portion 332 of the memory. After restoring the state in the portion 332 of memory, the performance monitoring hardware 347 is then caused to start monitoring the performance of the processor 346, generating telemetry data associated with processor 346 based on the state restored from the portion 332 of the memory 330 (which was accumulated in the previous host mode) and the current performance of the processor 346. The generated telemetry data is then read by the hypervisor and sends to the management partition 320.

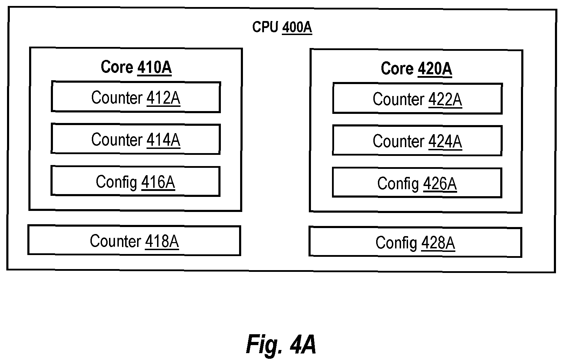

As briefly discussed, in some embodiments, the performance monitoring hardware includes a set of registers that are configured to monitor the performance of processors. In some embodiments, performance monitoring registers include CPU counter registers and CPU configuration registers. Figure 4A illustrates an example of a CPU 400A (which corresponds to the processors 151 of Figure 1), including two core processors 410A and 420A. As illustrated, each core processor 410A, 420A includes one or more counter registers and one or more configuration registers. For example, the core processor 410A includes two counter registers 412A, 414A, and a configuration register 416A; and the core processor 420A includes two counter registers 422A, 424A, and a configuration register 426A. Further, in some embodiments, the CPU 400A also includes one or more counter registers 418A and configuration registers 428A configured to monitor the CPU's overall performance.

A counter register is a register capable of incrementing and/or decrementing its contents. In some embodiments, the configuration register is configured to set what type of events are counted by the counter registers. In some embodiments, the telemetry data includes counter values generated by the counter registers, including (but not limited to) (1) processor pipeline slot utilization, (2) stalls due to LLC misses, (3) shortage in hardware resources, (4) shortage in software dependencies, (5) thermal and power capping throttling events, (6) processor microcode revision, or (7) whether hyper-threading is on or off.

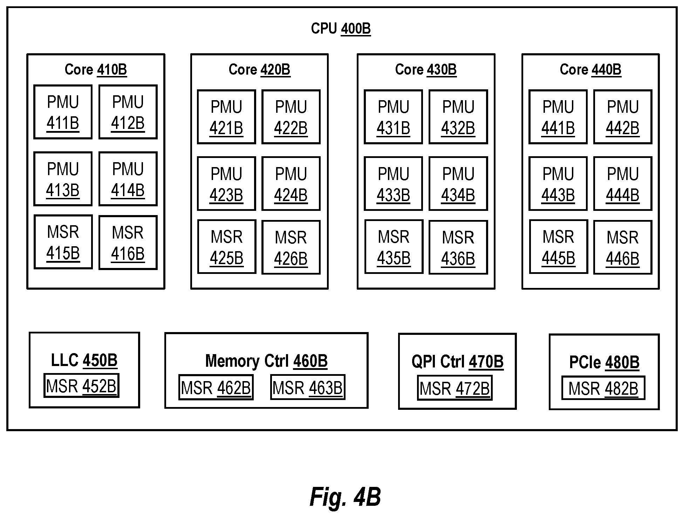

In some embodiments, the performance monitoring hardware includes model-specific registers (MSRs) for the core processors and/or uncore processors. As used herein, an uncore processor represents functions of a microprocessor that are not in the processor's primary core(s), but which are closely connected to the primary core(s) for performance or similar reasons. In some embodiments, MSRs include programmable counters (PMU) and fixed counters. Figure 4B illustrates another example of a CPU 400B (which also corresponds to the processors 151 of Figure 1) including four core processors 410B, 420B, 430B, and 440B and four uncore processors, namely, a load-line calibration (LLC) processor 450B, a memory control processor 460B, a QuickPath Interconnect (QPI) control processor 470B, and a peripheral component interconnect express (PCle) processor 480B. Each of the core processors 410B, 420B, 430B, and 440B includes one or more PMUs, and one or more MSRs (which are, in some embodiments, fixed counters), and each uncore processor includes one or more MSRs (which are, in some embodiments, fixed counters). As illustrated, the core processor 410B includes PMUs 411B-414B and MSRs 415B-416B; the core processor 420B includes PMUs 421B-424B and MSRs 425B-426B; the core processor 430B includes PMUs 431B-434B and MSRs 435B-436B; and the core processor 440B includes PMUs 441B-444B and MSRs 445B-446B. The uncore LLC processor 450B includes MSR 452B; the uncore memory control processor 460B includes MSRs 462B-463B; the uncore QPI control processor 470B includes MSR 472B, and the uncore PCle processor 480B includes MSR 482B.

The following discussion now refers to a number of methods and method acts that may be performed. Although the method acts may be discussed in a certain order or illustrated in a flow chart as occurring in a particular order, no particular ordering is required unless specifically stated, or required because an act is dependent on another act being completed prior to the act being performed.

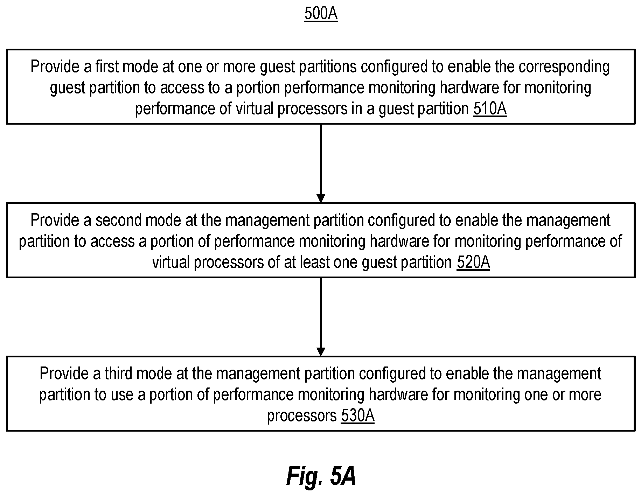

Figure 5A illustrates a flowchart of an example method 500A for multiplexing access to the performance monitoring hardware in different modes. The method 500A is implemented at a computer system that includes one or more processors associated with performance monitoring hardware configured to generate telemetry data related to performance of the one or more processors. The computer system has a hypervisor installed thereon configured to manage a plurality of virtual machines, including a management partition and one or more guest partitions, each of which corresponds to one of the plurality of virtual machines.

The method 500A includes providing a first mode (e.g., the guest mode) at one or more guest partitions configured to enable the corresponding partition to access a portion of performance monitoring hardware for monitoring one or more virtual processors of the corresponding guest partition (act 510A). The method further includes providing a second mode (e.g., the host mode) at a management partition configured to enable the management partition to access a portion of performance monitoring hardware for monitoring one or more virtual processors of at least one guest partition (act 520A). The method further includes providing a third mode (e.g., the system mode) at the management partition configured to enable the guest partition to access a portion of performance monitoring hardware for monitoring one or more processors of the computer system (act 530A).

In some embodiments, the first mode has a first priority, the second mode has a second priority that is lower than the first priority, and the third mode has a third priority that is lower than the second priority, as such, when the first mode is enabled, the second mode and the third mode are automatically disabled; and when the second mode is enabled, the third mode is automatically disabled.

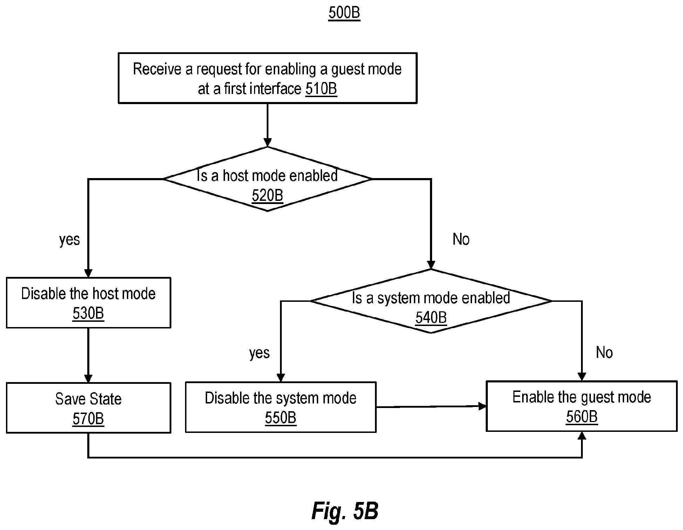

Figure 5B illustrates a flowchart of an example method 500B for enabling a guest mode at a first interface, which corresponds to the act 510A of Figure 5A. The method 500B includes receiving a request for enabling the guest mode at the first interface (act 510B). In some embodiments, the act 510B includes receiving a request, from a particular guest partition, for enabling the guest mode of the guest partition. Receiving the request from the particular guest partition, the particular guest partition passes the request to the management partition or the hypervisor. The method 500B further includes determining whether a host mode associated with the particular guest partition has been enabled (act 520B). In some embodiments, the act 520B includes determining, by the management partition, whether the host mode associated with the particular guest partition has been enabled.

In response to determining that the host mode associated with the particular guest partition has been enabled, state of the performance hardware monitoring hardware is saved in a memory (act 570B), and the host mode is caused to be disabled (act 530B). In some embodiments, the act 530B includes disabling, by the management partition and/or the hypervisor, the host mode associated with the particular guest partition. Once the host mode is disabled, the guest mode is caused to be enabled (act 560B).

On the other hand, in response to determining that the host mode associated with the particular guest partition is not enabled, it is then determined whether a system mode associated with at least one processor corresponding to one or more virtual processors of the particular guest partition has been enabled (act 540B). In some embodiments, the act 540B includes determining, by the hypervisor, whether the system mode associated with the at least one processor corresponding to the one or more virtual processors of the particular guest partition has been enabled.

In response to determining that the system mode is enabled, the system mode is caused to be disabled (act 550B). In some embodiments, the act 550B includes disabling, by the hypervisor, the system mode associated with the at least one processor corresponding to one or more virtual processors of the particular guest partition. Once the system mode is disabled, the guest mode is caused to be enabled (act 560B). Similarly, in response to determining that the system mode is not enabled, the guest mode is enabled (act 560B). In some embodiments, the act 560B includes enabling the guest mode, by the hypervisor, causing a portion of performance monitoring hardware associated with the at least one processor to generate telemetry data and sending the telemetry data to the guest partition directly or indirectly via the management partition.

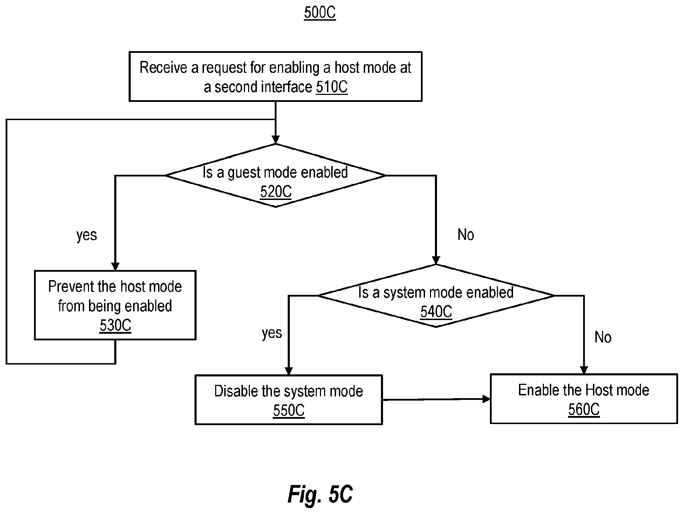

Figure 5C illustrates a flowchart of an example method 500C for enabling a host mode at a second interface of a management partition, which corresponds to the act 520A of Figure 5A. The method 500C includes receiving a request for enabling a host mode at the second interface (act 510C). In some embodiments, the act 510C includes receiving a request from the management partition for enabling the host mode associated with a particular guest partition selected from one or more guest partitions. The method 500C also includes determining whether a guest mode associated with the particular guest partition has been enabled (act 520C). In some embodiments, the act 520C includes determining, by the management partition, whether the guest mode associated with the particular guest partition has been enabled.

In response to determining that the guest mode associated with the particular guest partition has been enabled, the host mode associated with the particular guest partition is prevented from being enabled (act 530C). In some embodiments, the act 530C includes preventing, by the management partition and/or the hypervisor, the host mode associated with the particular guest partition from being enabled. On the other hand, in response to determining that the guest mode associated with the particular guest partition is not enabled, it is then determined whether a system mode associated with at least one processor corresponding to one or more virtual processors of the particular guest partition has been enabled (act 540C). In some embodiments, the act 540C includes determining, by the hypervisor, whether the system mode associated with the at least one processor corresponding to one or more virtual processors of the particular guest partition has been enabled.

In response to determining that the system mode has been enabled, the system mode is caused to disabled (act 550C). In some embodiments, the act 550C includes disabling, by the hypervisor, the system mode associated with the at least one processor corresponding to one or more virtual processors of the particular guest partition. Once the system mode is disabled, the host mode is caused to be enabled (act 560C). Similarly, in response to determining that the system mode is not enabled, the host mode is also caused to be enabled (act 560C). In some embodiments, the act 560C includes enabling, by the hypervisor, the host mode associated with the particular guest partition, causing a portion of performance monitoring hardware associated with the at least one processor to generate telemetry data and sending the telemetry data to the management partition.

Notably, even though at one point of time, the guest mode is enabled, and the host mode is prevented from being enabled (act 530C), the status of the host mode may change at another point of time. For example, in some cases, at a later time, the guest mode of the particular guest partition is disabled by the particular guest partition. In such a case, the act 520C changes its determination from yes to no, and the host mode may then be enabled (act 560C).

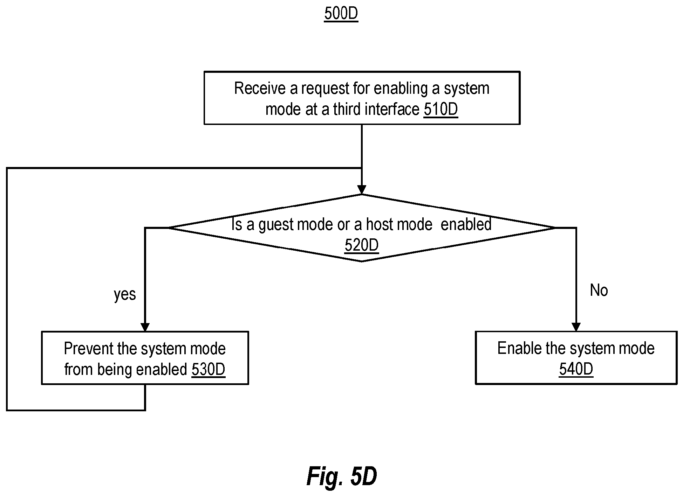

Figure 5D illustrates a flowchart of an example method 500D for enabling a system mode at a hypervisor, which corresponds to the act 530A of Figure 5A. The method 500D includes receiving a request for enabling a system mode at a management partition (act 510C). In some embodiments, the act 510D includes receiving a request for enabling the system mode associated with at least one processor corresponding to one or more virtual processors of a particular guest partition. In response to receiving the request, it is then determined whether the guest mode or a host mode associated with the particular guest partition has been enabled (act 520D). In response to determining that the guest mode or the host mode associated with the particular guest partition has been enabled, the system mode is prevented from being enabled (act 530D). In some embodiments, the act 530D includes preventing, by the hypervisor, the system mode associated with the at least one processor corresponding to the one or more virtual processors of the particular guest partition from being enabled. On the other hand, in response to determining that the guest mode and the host mode are both disabled, the system mode is caused to be enabled (act 540D). In some embodiments, the act 540D includes enabling, by the hypervisor, the system mode associated with the at least one processor corresponding to the one or more virtual processors of the particular guest partition, causing a portion of performance monitoring hardware associated with the at least one processor to generate telemetry data.

Similar to enabling the host mode illustrated in Figure 5C, even though at one point of time, the guest mode or the host mode associated with the at least one processor may be enabled, at another point of time, both of the guest mode or the host mode may be disabled. For example, at a later time, when the guest mode and the host mode are both disabled, the determination made at the act 520D is changed from yes to no, and the system mode is then enabled at the later time (act 540D).

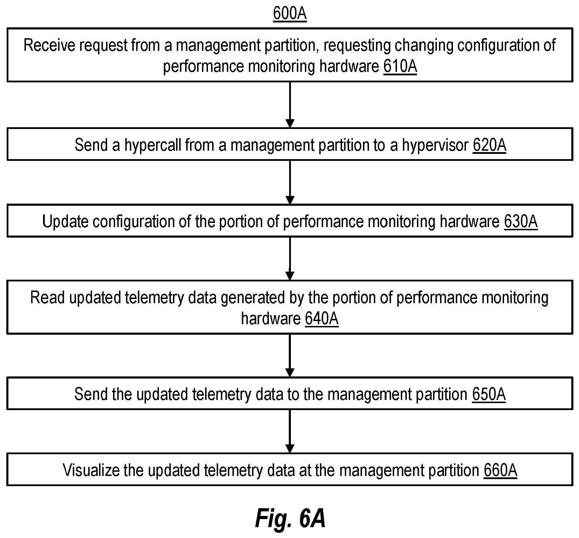

Figure 6A illustrates a flowchart of an example method 600A for modifying a configuration of a portion of performance monitoring software in a host mode. The method 600A includes receiving a request from a management partition, requesting updating at least one configuration of a portion of performance monitoring hardware (act 610A). In some embodiments, the portion of performance monitoring hardware is configured to generate telemetry data associated with at least one processor corresponding to one or more virtual processors of a particular guest partition. In response to receiving the request, the management partition sends a hypercall to a hypervisor (act 620A), passing the request from the management partition to the hypervisor. The method 600A also includes updating, by the hypervisor, the at least one configuration of the portion of performance monitoring hardware based on the request of the hypercall (act 630A), causing the portion of performance monitoring hardware to generate updated telemetry data based on the updated configuration. The hypervisor then reads the updated telemetry data generated (act 640A) and sends the updated telemetry data to the management partition (act 650A). In some embodiments, receiving the telemetry data, the management partition is further configured to visualize the received telemetry data at the second interface (act 660A).

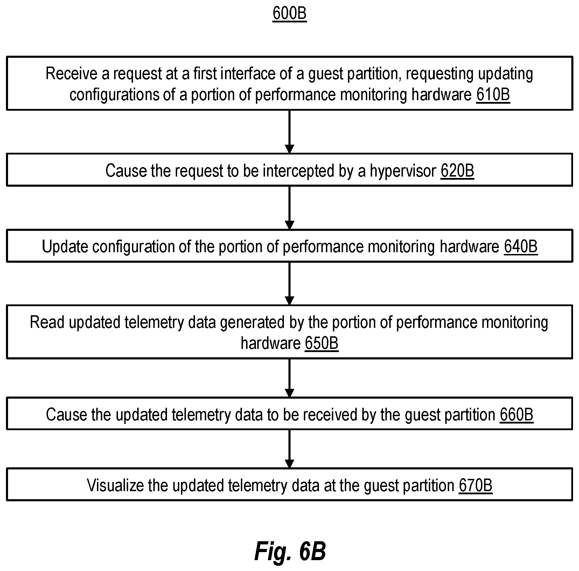

Figure 6B illustrates a flowchart of an example method 600B for modifying a configuration of a portion of performance monitoring hardware in a guest mode. The method 600B includes receiving request at a guest partition, requesting to update at least one configuration of the portion of performance monitoring hardware (act 610B). The portion of performance hardware is configured to generate telemetry data associated with at least one processor corresponding to one or more virtual processors of the guest partition. The method 600B also includes intercepting request by the hypervisor (act 620B). In some embodiments, the act 620B includes sending an intercept from the guest partition to the hypervisor.

Receiving the intercept, the hypervisor updates the at least one configuration of the portion of performance monitoring hardware based on the request in the intercept (act 640B), causing the portion of performance monitoring hardware to generate updated telemetry data based on the update configuration. The hypervisor then reads the updated telemetry data generated by the portion of performance monitoring hardware (act 650B) and causes the updated telemetry data to be received by the guest partition (act 660B). In some embodiments, receiving the updated telemetry data, the guest partition is configured to visualize the undated telemetry data at the guest partition (act 670B)

Although the subject matter has been described in language specific to structural features and/or methodological acts, it is to be understood that the subject matter defined in the appended claims is not necessarily limited to the described features or acts described above, or the order of the acts described above. Rather, the described features and acts are disclosed as example forms of implementing the claims.

The present invention may be embodied in other specific forms without departing from its essential characteristics. The described embodiments are to be considered in all respects only as illustrative and not restrictive. The scope of the invention is, therefore, indicated by the appended claims rather than by the foregoing description. All changes which come within the meaning and range of equivalency of the claims are to be embraced within their scope. When introducing elements in the appended claims, the articles "a," "an," "the," and "said" are intended to mean there are one or more of the elements. The terms "comprising," "including," and "having" are intended to be inclusive and mean that there may be additional elements other than the listed elements. Unless otherwise specified, the terms "set," "superset," and "subset" are intended to exclude an empty set, and thus "set" is defined as a non-empty set, "superset" is defined as a non-empty superset, and "subset" is defined as a non-empty subset. Unless otherwise specified, the term "subset" excludes the entirety of its superset (i.e., the superset contains at least one item not included in the subset). Unless otherwise specified, a "superset" can include at least one additional element, and a "subset" can exclude at least one element.

## Claims

1. A method (500A), implemented at a computer system that includes one or more processors associated with performance monitoring hardware configured to generate telemetry data related to performance of the one or more processors, for multiplexing access the performance monitoring hardware in different modes, the computer system having a hypervisor configured to manage a plurality of virtual machines including a management partition and one or more guest partitions, each of which corresponds to one of the plurality of virtual machines, the method comprising:
providing (510A) a first mode at the one or more guest partitions, the first mode enabling each of the one or more guest partitions to access the performance monitoring hardware for monitoring one or more virtual processors of a corresponding partition; and
providing (520A) a second mode at the management partition, the second mode enabling the management partition to access the performance monitoring hardware for monitoring one or more virtual processors of at least one of the one or more guest partitions, wherein:
when the second mode is enabled, the hypervisor reads telemetry data generated by the performance monitoring hardware for the one or more virtual processors of the at least one of the one or more guest partitions and passes the read telemetry data to the management partition,
the first mode has a first priority, and
the second mode has a second priority that is lower than the first priority, such that when the first mode at a particular guest partition is enabled, the second mode associated with the particular guest partition at the management partition is automatically disabled.

2. The method of claim 1, wherein the performance monitoring hardware includes one or more registers, and state of the performance monitoring hardware includes values stored in the one or more registers.

3. The method of claim 2, wherein the one or more registers include at least one of:
one or more CPU counter registers, or
one or more CPU configuration registers.

4. The method of claim 2, wherein the one or more registers include one or more model-specific registers, MSRs.

5. The method of claim 1, wherein the telemetry data includes at least one of:
processor pipeline slot utilization,
stalls due to last level cache, LLC, misses,
shortage in hardware resources,
thermal and power capping throttling events, or
whether hyper-threading is on or off.

6. The method of claim 1, the method further comprising providing (530A) a third mode at the management partition, the third mode enabling performance monitoring for processors of the computer system, wherein the third mode has a third priority that is lower than the second priority, such that when the first mode is enabled, the second mode and the third mode are automatically disabled, and when the second mode is enabled, the third mode is automatically disabled.

7. The method of claim 6, the method further comprising:
receiving a request from the management partition for enabling the second mode associated with a particular guest partition selected from the one or more guest partitions;
determining whether the first mode of the particular guest partition is enabled;
in response to determining that the first mode of the particular guest partition is enabled, preventing the second mode associated with the particular guest partition from being enabled; and
in response to determining that the first mode of the particular guest partition is disabled,
sending a request to the hypervisor for enabling the second mode associated with the particular guest partition;
determining, by the hypervisor, whether the third mode associated with at least one processor among the one or more processors corresponding to one or more virtual processors of the particular guest partition has been enabled;
in response to determining that the third mode associated with the at least one processor has been enabled, disabling the third mode associated with the at least one processor; and
in response to determining that the third mode associated with the at least one processor is disabled,
causing, by the hypervisor, a portion of the performance monitoring hardware associated with the at least one processor to generate a set of telemetry data associated with the at least one processor; and
providing, by the hypervisor, the set of telemetry data generated by the portion of performance monitoring hardware to the management partition.

8. The method of claim 7, when the second mode associated with the particular guest partition is enabled, the method further comprising:
receiving a request from the management partition, indicating a request for changing at least one configuration of a portion of performance monitoring hardware associated with the at least one processor;
sending, by the management partition, a hypercall to the hypervisor, for changing the at least one configuration of the performance monitoring hardware associated with the at least one processor;
updating, by the hypervisor, the at least one configuration of the portion of performance monitoring hardware associated with at least one processor, causing the portion of performance monitoring hardware to generate a set of updated telemetry data;
reading, by the hypervisor, the set of updated telemetry data generated by the portion of performance monitoring hardware;
sending, by the hypervisor, the set of updated telemetry data generated by the portion of performance monitoring hardware to the management partition; and
causing the set of updated telemetry data to be visualized at the management partition.

9. The method of claim 6, the method further comprising:
sending a request from the particular guest partition for enabling the first mode of the particular guest partition;
determining whether the second mode associated with the particular guest partition has been enabled;
in response to determining that the second mode associated with the particular guest partition is enabled,
saving a state of performance monitoring hardware associated with the particular guest partition in the second mode;
disabling the second mode associated with the particular guest partition;
enabling the third mode comprising restoring the state of performance monitoring hardware associated with the particular guest partition in the third mode; and
sending telemetry data generated by the performance monitoring hardware associated with the particular guest partition to the particular guest partition.

10. The method of claim 9, the method further comprising:
in response to determining that the second mode associated with the particular guest partition is disabled,
determining, by the hypervisor, whether the third mode associated with the at least one processor has been enabled;
in response to determining that the third mode associated with the at least one processor has been enabled, disabling, by the hypervisor, the third mode associated with the at least one processor; and
when the third mode associated with the at least one processor is disabled,
causing, by the hypervisor, the performance monitoring hardware associated with the particular guest partition to generate telemetry data associated with the at least one processor; and
causing the telemetry data associated with the particular partition to be sent to the particular guest partition.

11. The method of claim 9, when the first mode of the particular guest partition is enabled, the method further comprising:
receiving a request from the guest partition in the first mode, indicating a request for changing at least one configuration of a portion of performance monitoring hardware associated with the at least one processor;
sending, by the guest partition, an intercept to the hypervisor, for changing the at least one configuration of the performance monitoring hardware associated with the at least one processor;
updating, by the hypervisor, the at least one configuration of the portion of performance monitoring hardware associated with at least one processor, causing the portion of performance monitoring hardware to generate a set of updated telemetry data;
reading, by the hypervisor, the set of updated telemetry data generated by the portion of performance monitoring hardware;
causing the set of updated telemetry data generated by the portion of performance monitoring hardware to be received by the guest partition; and
causing the set of updated telemetry data to be visualized at the guest partition.

12. The method of claim 9, the method further comprising:
receiving a request for enabling a third mode associated with at least one processor among one or more processors;
identifying a guest partition that has one or more virtual processors corresponding to the at least one processor;
determining whether the first mode or the second mode associated with the guest partition has been enabled; and
in response to determining that the first mode or the second mode has been enabled, preventing the third mode from being enabled.

13. The method of claim 10, the method further comprising:
in response to determining that the first mode or the second mode has been disabled,
causing performance monitoring hardware associated with the at least one processor to generate telemetry data associated with at least one processor; and
receiving the telemetry data associated with the at least one processor.

14. A computer system (100), comprising
one or more processors (151) associated with performance monitoring hardware configured to generate telemetry data related to performance of the one or more processors; and
one or more computer-readable storage devices (154) stored thereon computer-executable instructions, when the computer-executable instructions are executed, the computer system is configured to run a hypervisor configured to manage a plurality of virtual machines, including a management partition and one or more guest partitions, each of which corresponds to one of the plurality of virtual machines, the computer system further configured to:
provide a first mode at the one or more guest partitions, the first mode enabling each of the one or more guest partitions to access the performance monitoring hardware for monitoring one or more virtual processors of a corresponding partition;
provide a second mode at the management partition, the second mode enabling the management partition to access the performance monitoring hardware for monitoring one or more virtual processors of at least one of the one or more guest partitions, wherein when the second mode is enabled the hypervisor reads telemetry data generated by the performance monitoring hardware for the one or more virtual processors of the at least one of the one or more guest partitions and passes the read telemetry data to the management partition; and
provide a third mode at the management partition, the third mode enabling performance monitoring for processors of the computer system, wherein:
the first mode has a first priority;
the second mode has a second priority that is lower than the first priority, such that when the first mode at a particular guest partition is enabled, the second mode associated with the particular guest partition at the management partition is automatically disabled.; and
the third mode has a third priority that is lower than the second priority, such that when the first mode is enabled, the second mode and the third mode are automatically disabled, and when the second mode is enabled, the third mode is automatically disabled.

15. The computer system of claim 14, the computer system further configured to:
receive a request from the management partition for enabling the second mode associated with a particular guest partition selected from the one or more guest partitions;
determining whether the first mode of the particular guest partition is enabled;
in response to determining that the first mode of the particular guest partition is enabled, prevent the second mode associated with the particular guest partition from being enabled; and
in response to determining that the first mode of the particular guest partition is disabled,
send a request to the hypervisor for enabling the second mode associated with the particular guest partition;
determine, by the hypervisor, whether the third mode associated with at least one processor among the one or more processors corresponding to one or more virtual processors of the particular guest partition has been enabled;
in response to determining that the third mode associated with the at least one processor has been enabled, disabling the third mode associated with the at least one processor; and
in response to determining that the third mode associated with the at least one processor is disabled,
cause, by the hypervisor, a portion of the performance monitoring hardware associated with the at least one processor to generate a set of telemetry data associated with the at least one processor; and
provide, by the hypervisor, the set of telemetry data generated by the portion of performance monitoring hardware to the management partition.

## Patentansprüche

1. Verfahren (500A), implementiert auf einem Computersystem, das einen oder mehrere Prozessoren beinhaltet, die einer Leistungsüberwachungshardware zugeordnet sind, die konfiguriert sind, um Telemetriedaten in Bezug auf die Leistung des einen oder der mehreren Prozessoren zu generieren, zum Multiplexen des Zugriffs auf die Leistungsüberwachungshardware in verschiedenen Modi, wobei das Computersystem einen Hypervisor aufweist, der für die Verwaltung einer Mehrzahl virtueller Maschinen einschließlich einer Verwaltungspartition und einer oder mehrerer Gastpartitionen konfiguriert ist, von denen jede einer der Mehrzahl virtueller Maschinen entspricht, wobei das Verfahren umfasst:
Bereitstellen (510A) eines ersten Modus an der einen oder den mehreren Gastpartitionen, wobei der erste Modus ermöglicht, dass jede der einen oder mehreren Gastpartitionen auf die Leistungsüberwachungshardware Überwachung eines oder mehrerer virtueller Prozessoren einer entsprechenden Partition zugreift; und
Bereitstellen (520A) eines zweiten Modus an der Verwaltungspartition, wobei der zweite Modus der Verwaltungspartition den Zugriff auf die Leistungsüberwachungshardware zur Überwachung eines oder mehrerer virtueller Prozessoren mindestens einer der einen oder mehreren Gastpartitionen ermöglicht, wobei:
wenn der zweite Modus aktiviert ist, der Hypervisor Telemetriedaten liest, die von der Leistungsüberwachungshardware für den einen oder die mehreren virtuellen Prozessoren der mindestens einen der einen oder mehreren Gastpartitionen generiert wurden, und die gelesenen Telemetriedaten an die Verwaltungspartition weiterleitet,
der erste Modus eine erste Priorität hat, und
der zweite Modus eine zweite Priorität hat, die niedriger als die erste Priorität ist, so dass, wenn der erste Modus auf einer bestimmten Gastpartition aktiviert ist, der zweite Modus, der der bestimmten Gastpartition auf der Verwaltungspartition zugeordnet ist, automatisch deaktiviert wird.

2. Verfahren nach Anspruch 1, wobei die Leistungsüberwachungshardware ein oder mehrere Register beinhaltet und der Zustand der Leistungsüberwachungshardware Werte enthält, die in dem einen oder den mehreren Registern gespeichert sind.

3. Verfahren nach Anspruch 2, wobei das eine oder die mehreren Register zumindest eines beinhalten aus:
einem oder mehreren CPU-Zählerregistern, oder
einem oder mehreren CPU-Konfigurationsregistern.

4. Verfahren nach Anspruch 2, wobei das eine oder die mehreren Register ein oder mehrere modellspezifische Register, MSR, beinhalten.

5. Verfahren nach Anspruch 1, wobei die Telemetriedaten zumindest eines beinhalten aus:
Nutzung des Prozessor-Pipeline-Slots,
Verzögerungen aufgrund von Fehlzugriffe auf den Last-Level-Zwischenspeicher, LLC,
Mangel an Hardwareressourcen,
Drosselungsereignissen durch Wärme- und Leistungsoberbegrenzung, oder
ob Hyper-Threading ein- oder ausgeschaltet ist.

6. Verfahren nach Anspruch 1, wobei das Verfahren ferner das Bereitstellen (530A) eines dritten Modus an der Verwaltungspartition umfasst, wobei der dritte Modus die Leistungsüberwachung für Prozessoren des Computersystems ermöglicht, wobei der dritte Modus eine dritte Priorität hat, die niedriger als die zweite Priorität ist, so dass, wenn der erste Modus aktiviert ist, der zweite Modus und der dritte Modus automatisch deaktiviert werden, und wenn der zweite Modus aktiviert ist, der dritte Modus automatisch deaktiviert wird.

7. Verfahren nach Anspruch 6, wobei das Verfahren ferner umfasst:
Empfangen einer Anforderung von der Verwaltungspartition zur Aktivierung des zweiten Modus, der einer bestimmten Gastpartition zugeordnet ist, die aus der einen oder den mehreren Gastpartitionen ausgewählt wurde;
Bestimmen, ob der erste Modus der bestimmten Gastpartition aktiviert ist;
wenn bestimmt wird, dass der erste Modus der bestimmten Gastpartition aktiviert ist, Verhindern, dass der zweite Modus, der der bestimmten Gastpartition zugeordnet ist, aktiviert wird; und
wenn bestimmt wird, dass der erste Modus der bestimmten Gastpartition deaktiviert ist,
Senden einer Anforderung an den Hypervisor zur Aktivierung des zweiten Modus, der der bestimmten Gastpartition zugeordnet ist;
Bestimmen durch den Hypervisor, ob der dritte Modus, der mindestens einem Prozessor aus dem einen oder den mehreren Prozessoren zugeordnet ist, die einem oder mehreren virtuellen Prozessoren der bestimmten Gastpartition entsprechen, aktiviert ist;
wenn bestimmt wird, dass der dritte Modus, der dem mindestens einen Prozessor zugeordnet ist, aktiviert ist, Deaktivieren des dritten Modus, der dem mindestens einem Prozessor zugeordnet ist; und
wenn bestimmt wird, dass der dritte Modus, der dem mindestens einen Prozessor zugeordnet ist, deaktiviert ist,
Veranlassen durch den Hypervisor, dass ein Teil der Leistungsüberwachungshardware, der dem mindestens einen Prozessor zugeordnet ist, einen Satz Telemetriedaten generiert, die dem mindestens einen Prozessor zugeordnet sind; und
Bereitstellen des Satzes Telemetriedaten, die von dem Teil der Leistungsüberwachungshardware generiert werden, durch den Hypervisor an die Verwaltungspartition.

8. Verfahren nach Anspruch 7, wobei das Verfahren, wenn der zweite Modus, der der bestimmten Gastpartition zugeordnet ist, aktiviert ist, ferner umfasst:
Empfangen einer Anforderung von der Verwaltungspartition mit Angabe einer Anforderung zur Änderung mindestens einer Konfiguration eines Teils der Leistungsüberwachungshardware, der dem mindestens einem Prozessor zugeordnet ist;
Senden eines Hypercalls an den Hypervisor durch die Verwaltungspartition, um die mindestens eine Konfiguration der Leistungsüberwachungshardware zu ändern, die dem mindestens einem Prozessor zugeordnet ist;
Aktualisieren der mindestens einen Konfiguration des Teils der Leistungsüberwachungshardware, der mindestens einem Prozessor zugeordnet ist, durch den Hypervisor, wodurch der Teil der Leistungsüberwachungshardware dazu veranlasst wird, einen Satz aktualisierter Telemetriedaten zu generieren;
Lesen des Satzes aktualisierter Telemetriedaten, die von dem Teil der Leistungsüberwachungshardware generiert werden, durch den Hypervisor;
Senden des Satzes aktualisierter Telemetriedaten, die von dem Teil der Leistungsüberwachungshardware generiert wurden, durch den Hypervisor an die Verwaltungspartition; und
Veranlassen, dass der Satz aktualisierter Telemetriedaten auf der Verwaltungspartition angezeigt wird.

9. Verfahren nach Anspruch 6, wobei das Verfahren ferner umfasst:
Senden einer Anforderung von der bestimmten Gastpartition zur Aktivierung des ersten Modus der bestimmten Gastpartition;
Bestimmen, ob der zweite Modus, der der bestimmten Gastpartition zugeordnet ist, aktiviert ist;
wenn bestimmt wird, dass der zweite Modus, der der bestimmten Gastpartition zugeordnet ist, aktiviert ist,
Speichern eines Zustands einer Leistungsüberwachungshardware, die der jeweiligen Gastpartition im zweiten Modus zugeordnet ist;
Deaktivieren des zweiten Modus, der der bestimmten Gastpartition zugeordnet ist;
Aktivieren des dritten Modus, der das Wiederherstellen des Zustands der Leistungsüberwachungshardware umfasst, der der jeweiligen Gastpartition im dritten Modus zugeordnet ist; und
Senden von Telemetriedaten, die von der Leistungsüberwachungshardware generiert wurden, die der bestimmten Gastpartition zugeordnet ist, an die bestimmte Gastpartition.

10. Verfahren nach Anspruch 9, wobei das Verfahren ferner umfasst:
wenn bestimmt wird, dass der zweite Modus, der der bestimmten Gastpartition zugeordnet ist, deaktiviert ist,
Bestimmen durch den Hypervisor, ob der dritte Modus, der dem mindestens einen Prozessor zugeordnet ist, aktiviert ist;
wenn bestimmt wird, dass der dritte Modus, der dem mindestens einen Prozessor zugeordnet ist, aktiviert ist, Deaktivieren des dritten Modus, der dem mindestens einem Prozessor zugeordnet ist, durch den Hypervisor; und
wenn der dritte Modus, der dem mindestens einen Prozessor zugeordnet ist, deaktiviert ist,
Veranlassen der Leistungsüberwachungshardware, die der bestimmten Gastpartition zugeordnet ist, durch den Hypervisor dazu, einen Satz Telemetriedaten zu generieren, die dem mindestens einen Prozessor zugeordnet sind; und
Veranlassen, dass die Telemetriedaten, die der bestimmten Partition zugeordnet sind, an die bestimmte Gastpartition gesendet werden.

11. Verfahren nach Anspruch 9, wobei das Verfahren, wenn der erste Modus der bestimmten Gastpartition aktiviert ist, ferner umfasst:
Empfangen einer Anforderung von der Gastpartition in dem ersten Modus mit Angabe einer Anforderung zur Änderung mindestens einer Konfiguration eines Teils der Leistungsüberwachungshardware, der dem mindestens einem Prozessor zugeordnet ist;
Senden eines Intercepts an den Hypervisor durch die Gastpartition, um die mindestens eine Konfiguration der Leistungsüberwachungshardware zu ändern, die dem mindestens einem Prozessor zugeordnet ist;
Aktualisieren der mindestens einen Konfiguration des Teils der Leistungsüberwachungshardware, der mindestens einem Prozessor zugeordnet ist, durch den Hypervisor, wodurch der Teil der Leistungsüberwachungshardware dazu veranlasst wird, einen Satz aktualisierter Telemetriedaten zu generieren;
Lesen des Satzes aktualisierter Telemetriedaten, die von dem Teil der Leistungsüberwachungshardware generiert werden, durch den Hypervisor;
Veranlassen, dass der Satz aktualisierter Telemetriedaten, die von dem Teil der Leistungsüberwachungshardware generiert wurden, von der Gastpartition empfangen werden; und
Veranlassen, dass der Satz aktualisierter Telemetriedaten auf der Gastpartition angezeigt wird.

12. Verfahren nach Anspruch 9, wobei das Verfahren ferner umfasst:
Empfangen einer Anforderung zur Aktivierung eines dritten Modus, der zumindest einem Prozessor aus einem oder mehreren Prozessoren zugeordnet ist;
Identifizieren einer Gastpartition, die über einen oder mehrere virtuelle Prozessoren verfügt, die dem mindestens einen Prozessor entsprechen;
Bestimmen, ob der erste Modus oder der zweite Modus, der der Gastpartition zugeordnet ist, aktiviert ist; und
wenn bestimmt wird, dass der erste Modus oder der zweite Modus aktiviert ist, Verhindern, dass der dritte Modus aktiviert wird.

13. Verfahren nach Anspruch 10, wobei das Verfahren ferner umfasst:
wenn bestimmt wird, dass der erste Modus oder der zweite Modus deaktiviert ist,
Veranlassen, dass die Leistungsüberwachungshardware, die dem mindestens einen Prozessor zugeordnet ist, einen Satz Telemetriedaten generiert, die mindestens einen Prozessor zugeordnet sind; und
Empfangen der Telemetriedaten, die dem mindestens einen Prozessor zugeordnet sind.

14. Computersystem (100), umfassend:
einen oder mehrere Prozessoren (151), die mit Leistungsüberwachungshardware verbunden sind, die für die Generierung von Telemetriedaten in Bezug auf eine Leistung des einen oder der mehreren Prozessoren konfiguriert ist; und
eine oder mehrere computerlesbare Speichervorrichtungen (154), auf denen computerausführbare Anweisungen gespeichert sind, wobei, wenn die computerausführbaren Anweisungen ausgeführt werden, das Computersystem dazu konfiguriert ist, einen Hypervisor auszuführen, der für die Verwaltung einer Mehrzahl virtueller Maschinen einschließlich einer Verwaltungspartition und einer oder mehrerer Gastpartitionen konfiguriert ist, von denen jede einer der Mehrzahl virtueller Maschinen entspricht, wobei das Computersystem ferner dazu konfiguriert ist:
Bereitstellen eines ersten Modus an der einen oder den mehreren Gastpartitionen, wobei der erste Modus ermöglicht, dass jede der einen oder mehreren Gastpartitionen auf die Leistungsüberwachungshardware Überwachung eines oder mehrerer virtueller Prozessoren einer entsprechenden Partition zugreift;
Bereitstellen eines zweiten Modus an der Verwaltungspartition, wobei der zweite Modus ermöglicht, dass die Verwaltungspartition auf die Leistungsüberwachungshardware zur Überwachung eines oder mehrerer virtueller Prozessoren zumindest einer der einen oder mehreren Gastpartitionen zugreift; wobei, wenn der zweite Modus aktiviert ist, der Hypervisor Telemetriedaten liest, die von der Leistungsüberwachungshardware für den einen oder die mehreren virtuellen Prozessoren der mindestens einen der einen oder mehreren Gastpartitionen generiert wurden, und die gelesenen Telemetriedaten an die Verwaltungspartition weiterleitet; und
Bereitstellen eines dritten Modus an der Verwaltungspartition, wobei der dritte Modus die Leistungsüberwachung für Prozessoren des Computersystems ermöglicht, wobei:
der erste Modus eine erste Priorität hat;
der zweite Modus eine zweite Priorität hat, die niedriger als die erste Priorität ist, so dass, wenn der erste Modus auf einer bestimmten Gastpartition aktiviert ist, der zweite Modus, der der bestimmten Gastpartition auf der Verwaltungspartition zugeordnet ist, automatisch deaktiviert wird; und
der dritte Modus eine dritte Priorität hat, die niedriger als die zweite Priorität ist, so dass, wenn der erste Modus aktiviert ist, der zweite Modus und der dritte Modus automatisch deaktiviert werden, und wenn der zweite Modus aktiviert ist, der dritte Modus automatisch deaktiviert wird.

15. Computersystem nach Anspruch 14, wobei das Computersystem ferner dazu konfiguriert ist:
Empfangen einer Anforderung von der Verwaltungspartition zur Aktivierung des zweiten Modus, der einer bestimmten Gastpartition zugeordnet ist, die aus der einen oder den mehreren Gastpartitionen ausgewählt wurde;
Bestimmen, ob der erste Modus der bestimmten Gastpartition aktiviert ist;
wenn bestimmt wird, dass der erste Modus der bestimmten Gastpartition aktiviert ist, Verhindern, dass der zweite Modus, der der bestimmten Gastpartition zugeordnet ist, aktiviert wird; und
wenn bestimmt wird, dass der erste Modus der bestimmten Gastpartition deaktiviert ist,
Senden einer Anforderung an den Hypervisor zur Aktivierung des zweiten Modus, der der bestimmten Gastpartition zugeordnet ist;
Bestimmen durch den Hypervisor, ob der dritte Modus, der mindestens einem Prozessor aus dem einen oder den mehreren Prozessoren zugeordnet ist, die einem oder mehreren virtuellen Prozessoren der bestimmten Gastpartition entsprechen, aktiviert ist;
wenn bestimmt wird, dass der dritte Modus, der dem mindestens einen Prozessor zugeordnet ist, aktiviert ist, Deaktivieren des dritten Modus, der dem mindestens einem Prozessor zugeordnet ist; und
wenn bestimmt wird, dass der dritte Modus, der dem mindestens einen Prozessor zugeordnet ist, deaktiviert ist,
Veranlassen durch den Hypervisor, dass ein Teil der Leistungsüberwachungshardware, der dem mindestens einen Prozessor zugeordnet ist, einen Satz Telemetriedaten generiert, die dem mindestens einen Prozessor zugeordnet sind; und
Bereitstellen des Satzes Telemetriedaten, die von dem Teil der Leistungsüberwachungshardware generiert werden, durch den Hypervisor an die Verwaltungspartition.

## Revendications

1. Procédé (500A), mis en œuvre au niveau d'un système informatique qui comporte un ou plusieurs processeurs associés à un matériel de surveillance des performances configuré pour générer des données de télémétrie relatives aux performances des un ou plusieurs processeurs, pour multiplexer l'accès au matériel de surveillance des performances dans différents modes, le système informatique ayant un hyperviseur configuré pour gérer une pluralité de machines virtuelles comportant une partition de gestion et une ou plusieurs partitions invitées, dont chacune correspond à l'une de la pluralité de machines virtuelles, le procédé comprenant :
la fourniture (510A) d'un premier mode au niveau des une ou plusieurs partitions invitées, le premier mode permettant à chacune des une ou plusieurs partitions invitées d'accéder au matériel de surveillance des performances pour surveiller un ou plusieurs processeurs virtuels d'une partition correspondante ; et
la fourniture (520A) d'un deuxième mode au niveau de la partition de gestion, le deuxième mode permettant à la partition de gestion d'accéder au matériel de surveillance des performances pour surveiller un ou plusieurs processeurs virtuels d'au moins une des une ou plusieurs partitions invitées, dans lequel :
lorsque le deuxième mode est activé, l'hyperviseur lit des données de télémétrie générées par le matériel de surveillance des performances pour les un ou plusieurs processeurs virtuels de l'au moins une des une ou plusieurs partitions invitées et transmet les données de télémétrie lues à la partition de gestion,
le premier mode a une première priorité, et
le deuxième mode a une deuxième priorité qui est inférieure à la première priorité, de sorte que lorsque le premier mode au niveau d'une partition invitée particulière est activé, le deuxième mode associé à la partition invitée particulière au niveau de la partition de gestion est automatiquement désactivé.

2. Procédé selon la revendication 1, dans lequel le matériel de surveillance des performances comporte un ou plusieurs registres, et l'état du matériel de surveillance des performances comporte des valeurs stockées dans les un ou plusieurs registres.

3. Procédé selon la revendication 2, dans lequel les un ou plusieurs registres comportent au moins l'un des éléments suivants :
un ou plusieurs registres de compteur CPU, ou
un ou plusieurs registres de configuration CPU.

4. Procédé selon la revendication 2, dans lequel les un ou plusieurs registres comportent un ou plusieurs registres spécifiques au modèle, MSR.

5. Procédé selon la revendication 1, dans lequel les données de télémétrie comportent au moins l'un des éléments suivants :
utilisation des emplacements du pipeline du processeur,
blocages dus aux défauts du cache de dernier niveau (LLC),
pénurie de ressources matérielles,
événements de limitation thermique et de puissance, ou
si l'hyper-threading est activé ou désactivé.

6. Procédé selon la revendication 1, le procédé comprenant en outre la fourniture (530A) d'un troisième mode au niveau de la partition de gestion, le troisième mode permettant la surveillance des performances de processeurs du système informatique, dans lequel le troisième mode a une troisième priorité qui est inférieure à la deuxième priorité, de sorte que lorsque le premier mode est activé, le deuxième mode et le troisième mode sont automatiquement désactivés, et lorsque le deuxième mode est activé, le troisième mode est automatiquement désactivé.

7. Procédé selon la revendication **6,** le procédé comprenant en outre :
la réception d'une demande de la partition de gestion pour activer le deuxième mode associé à une partition invitée particulière sélectionnée à partir des une ou plusieurs partitions invitées ;
le fait de déterminer si le premier mode de la partition invitée particulière est activé ;
en réponse à la détermination que le premier mode de la partition invitée particulière est activé, le fait d'empêcher l'activation du deuxième mode associé à la partition invitée particulière ; et
en réponse à la détermination que le premier mode de la partition invitée particulière est désactivé,
l'envoi d'une demande à l'hyperviseur pour activer le deuxième mode associé à la partition invitée particulière ;
le fait de déterminer, par l'hyperviseur, si le troisième mode associé à au moins un processeur parmi les un ou plusieurs processeurs correspondant à un ou plusieurs processeurs virtuels de la partition invitée particulière a été activé ;
en réponse à la détermination que le troisième mode associé à l'au moins un processeur a été activé, la désactivation du troisième mode associé à l'au moins un processeur ; et
en réponse à la détermination que le troisième mode associé à l'au moins un processeur est désactivé,
le fait d'amener, par l'hyperviseur, une partie du matériel de surveillance des performances associé à l'au moins un processeur à générer un ensemble de données de télémétrie associées à l'au moins un processeur ; et
la fourniture, par l'hyperviseur, de l'ensemble de données de télémétrie générées par la partie du matériel de surveillance des performances à la partition de gestion.

8. Procédé selon la revendication 7, lorsque le deuxième mode associé à la partition invitée particulière est activé, le procédé comprenant en outre :
la réception d'une demande de la partition de gestion, indiquant une demande de modification d'au moins une configuration d'une partie du matériel de surveillance des performances associé à l'au moins un processeur ;
l'envoi, par la partition de gestion, **d'un** hyperappel à l'hyperviseur, pour modifier l'au moins une configuration du matériel de surveillance des performances associé à l'au moins un processeur ;
la mise à jour, par l'hyperviseur, de l'au moins une configuration de la partie du matériel de surveillance des performances associé à au moins un processeur, amenant la partie du matériel de surveillance des performances à générer un ensemble de données de télémétrie mises à jour ;
la lecture, par l'hyperviseur, de l'ensemble de données de télémétrie mises à jour générées par la partie du matériel de surveillance des performances ;
l'envoi, par l'hyperviseur, de l'ensemble de données de télémétrie mises à jour générées par la partie du matériel de surveillance des performances à la partition de gestion ; et
le fait d'amener l'ensemble de données de télémétrie mises à jour à être visualisées au niveau de la partition de gestion.

9. Procédé selon la revendication **6,** le procédé comprenant en outre :
l'envoi d'une demande à partir de la partition invitée particulière pour activer le premier mode de la partition invitée particulière ;
le fait de déterminer si le deuxième mode associé à la partition invitée particulière a été activé ;
en réponse à la détermination que le deuxième mode associé à la partition invitée particulière est activé,
la sauvegarde **d'un** état du matériel de surveillance des performances associé à la partition invitée particulière dans le deuxième mode ;
la désactivation du deuxième mode associé à la partition invitée particulière ;
l'activation du troisième mode comprenant la restauration de l'état du matériel de surveillance des performances associé à la partition invitée particulière dans le troisième mode ; et
l'envoi de données de télémétrie générées par le matériel de surveillance des performances associé à la partition invitée particulière à la partition invitée particulière.

10. Procédé selon la revendication 9, le procédé comprenant en outre :
en réponse à la détermination que le deuxième mode associé à la partition invitée particulière est désactivé,
le fait de déterminer, par l'hyperviseur, si le troisième mode associé à l'au moins un processeur a été activé ;
en réponse à la détermination que le troisième mode associé à l'au moins un processeur a été activé, la désactivation, par l'hyperviseur, du troisième mode associé à l'au moins un processeur ; et
lorsque le troisième mode associé à l'au moins un processeur est désactivé,
le fait d'amener, par l'hyperviseur, le matériel de surveillance des performances associé à la partition invitée particulière à générer des données de télémétrie associées à l'au moins un processeur ; et
le fait d'amener les données de télémétrie associées à la partition particulière à être envoyées à la partition invitée particulière.

11. Procédé selon la revendication 9, lorsque le premier mode de la partition invitée particulière est activé, le procédé comprenant en outre :
la réception d'une demande de la partition invitée dans le premier mode, indiquant une demande de modification d'au moins une configuration d'une partie du matériel de surveillance des performances à l'au moins un processeur ;
l'envoi, par la partition invitée, d'une interception à l'hyperviseur, pour modifier l'au moins une configuration du matériel de surveillance des performances associé à l'au moins un processeur ;
la mise à jour, par l'hyperviseur, de l'au moins une configuration de la partie du matériel de surveillance des performances associé à au moins un processeur, amenant la partie du matériel de surveillance des performances à générer un ensemble de données de télémétrie mises à jour ;
la lecture, par l'hyperviseur, de l'ensemble de données de télémétrie mises à jour générées par la partie du matériel de surveillance des performances ;
le fait d'amener l'ensemble de données de télémétrie mises à jour générées par la partie du matériel de surveillance des performances à être reçues par la partition invitée ; et
le fait d'amener l'ensemble de données de télémétrie mises à jour à être visualisées au niveau de la partition invitée.

12. Procédé selon la revendication 9, le procédé comprenant en outre :
la réception d'une demande d'activation d'un troisième mode associé à au moins un processeur parmi un ou plusieurs processeurs ;
l'identification d'une partition invitée qui a un ou plusieurs processeurs virtuels correspondant à l'au moins un processeur ;
le fait de déterminer si le premier mode ou le deuxième mode associé à la partition invitée a été activé ; et
en réponse à la détermination que le premier mode ou le deuxième mode a été activé, le fait d'empêcher l'activation du troisième mode.

13. Procédé selon la revendication 10, le procédé comprenant en outre :
en réponse à la détermination que le premier mode ou le deuxième mode a été désactivé,
le fait d'amener un matériel de surveillance des performances associé à l'au moins un processeur à générer des données de télémétrie associées à au moins un processeur ; et
la réception des données de télémétrie associées à l'au moins un processeur.

14. Système informatique (100), comprenant
un ou plusieurs processeurs (151) associés à un matériel de surveillance des performances configuré pour générer des données de télémétrie liées aux performances des un ou plusieurs processeurs ; et
un ou plusieurs dispositifs de stockage lisibles par ordinateur (154) sur lesquels sont enregistrées des instructions exécutables par ordinateur, lorsque les instructions exécutables par ordinateur sont exécutées, le système informatique est configuré pour mettre en œuvre un hyperviseur configuré pour gérer une pluralité de machines virtuelles, comportant une partition de gestion et une ou plusieurs partitions invitées, dont chacune correspond à l'une de la pluralité de machines virtuelles, le système informatique étant en outre configuré pour :
la fourniture d'un premier mode au niveau des une ou plusieurs partitions invitées, le premier mode permettant à chacune des une ou plusieurs partitions invitées d'accéder au matériel de surveillance des performances pour surveiller un ou plusieurs processeurs virtuels d'une partition correspondante ; et
la fourniture d'un deuxième mode au niveau de la partition de gestion, le deuxième mode permettant à la partition de gestion d'accéder au matériel de surveillance des performances pour surveiller un ou plusieurs processeurs virtuels d'au moins une des une ou plusieurs partitions invitées, dans lequel, lorsque le deuxième mode est activé, l'hyperviseur lit des données de télémétrie générées par le matériel de surveillance des performances pour les un ou plusieurs processeurs virtuels de l'au moins une des une ou plusieurs partitions invitées et transmet les données de télémétrie lues à la partition de gestion ; et
la fourniture d'un troisième mode au niveau de la partition de gestion, le troisième mode permettant la surveillance des performances des processeurs du système informatique, dans lequel :
le premier mode a une première priorité ;
le deuxième mode a une deuxième priorité qui est inférieure à la première priorité, de sorte que lorsque le premier mode au niveau d'une partition invitée particulière est activé, le deuxième mode associé à la partition invitée particulière au niveau de la partition de gestion est automatiquement désactivé ; et
le troisième mode a une troisième priorité qui est inférieure à la deuxième priorité, de sorte que lorsque le premier mode est activé, le deuxième mode et le troisième mode sont automatiquement désactivés, et lorsque le deuxième mode est activé, le troisième mode est automatiquement désactivé.

15. Système informatique selon la revendication 14, le système informatique étant en outre configuré pour :
recevoir une demande de la partition de gestion pour activer le deuxième mode associé à une partition invitée particulière sélectionnée à partir des une ou plusieurs partitions invitées ;
déterminer si le premier mode de la partition invitée particulière est activé ;
en réponse à la détermination que le premier mode de la partition invitée particulière est activé, empêcher l'activation du deuxième mode associé à la partition invitée particulière ; et
en réponse à la détermination que le premier mode de la partition invitée particulière est désactivé,
envoyer une demande à l'hyperviseur pour activer le deuxième mode associé à la partition invitée particulière ;
déterminer, par l'hyperviseur, si le troisième mode associé à au moins un processeur parmi les un ou plusieurs processeurs correspondant à un ou plusieurs processeurs virtuels de la partition invitée particulière a été activé ;
en réponse à la détermination que le troisième mode associé à l'au moins un processeur a été activé, désactiver le troisième mode associé à l'au moins un processeur ; et
en réponse à la détermination que le troisième mode associé à l'au moins un processeur est désactivé,
amener, par l'hyperviseur, une partie du matériel de surveillance des performances associé à l'au moins un processeur à générer un ensemble de données de télémétrie associées à l'au moins un processeur ; et
fournir, par l'hyperviseur, l'ensemble de données de télémétrie générées par la partie du matériel de surveillance des performances à la partition de gestion.
